# EUROPEAN PATENT SPECIFICATION

(11) **EP 2 131 083 B1**
(45) Date of publication and mention of the grant of the patent: **17.08.2011**
(21) Application number: 09162094.8
(22) Date of filing: 05.06.2009
(51) Int. Cl.: F16L 3/00, F16B 7/18, F16B 37/04

(54) **Connecting device for connecting a threaded rod to a construction element**
Verbindungsvorrichtung für die Verbindung einer Gewindestange an ein Bauelement
Dispositif de connexion pour la connexion d'une tige filetée à un element de construction

(30) Priority: 06.06.2008 NL 2001654
(43) Date of publication of application: 09.12.2009
(73) Proprietor: J. van Walraven Holding B.V., 3641 RK Mijdrecht (NL)
(72) Inventor: van Walraven, Jan, 3641 GP Mijdrecht (NL)
(74) Representative: Brookhuis, Hendrik Jan Arnold

(56) References cited:
- EP-A- 1 039 196

## Description

The invention relates to a connecting device for connecting a first threaded rod with a construction element such as a second threaded rod or a bracket or similar object, the device comprising a housing which defines a first receiving space and a first insert opening for inserting an end of the first threaded rod in the first receiving space.

Connecting devices for connecting two threaded rods with each other are known from the art. These connecting devices typically comprise a cylindrical body provided with a first and second receiving space, both spaces provided with female thread along their inside walls for engaging the end of a threaded rod. These connecting devices are designed to connect types of threaded rods having a specific diameter. Therefore each type of threaded rod needs its own type of connecting device. Furthermore, the manufacture of these connecting devices is a complicated process since the receiving spaces need to be provided with internal screw thread.

EP 1 039 126 discloses a pipe clamp, which pipe clamp is provided with a female fastening part that can be pressed on a male fastening part.

It is an object of the invention to at least partially obviate the problems described hereinabove, and in particular to provide an alternative connecting device of a simple design.

This object is achieved by a connecting device for connecting a first threaded rod with an construction element such as a second threaded rod or a bracket or similar object, the device comprising a housing which defines a first receiving space and a first insert opening for inserting an end of the first threaded rod in the first receiving space, wherein the connecting device furthermore comprises:
- a first set of nuts comprising at least two nuts of a mutual different diameter, which first set is received in the first receiving space and is positioned in line with the first insert opening, wherein the nuts are positioned in an order of reducing inner diameter when seen from the respective insert opening, for engaging the first threaded rod end inserted through the first insert opening;
- a first resilient body for positioning the first set of nuts in an axial direction against the housing near the first insert opening; and
- connecting means for connecting the connecting device with the construction element such as a second threaded rod or a bracket or similar object.

By combining a housing with a set of nuts, the housing itself does not need to be provided with female thread along its inside walls for engaging the threaded rod ends. Therefore the housing can be of a simple design and relatively simple to produce. Furthermore, by using mass produced nuts in combination with the housing, production costs can be further reduced.

The connecting device comprises at least two nuts of different inner diameter for receiving the threaded end of a threaded rods inserted in the first insert opening. Since the set of nuts comprises at least two nuts of mutual different inner diameter, the connecting device may receive a type of threaded rod having a diameter for interacting with the nut of a first diameter, as well as a type of rod having a diameter for interacting with the nut of the second diameter. Thus the connecting device can be used with multiple types of rods.

Furthermore, by simply providing a connecting device with a set of nuts comprising three or more nuts with a mutual different inner diameter, the connecting device can be used with three or more types of rods. Also, by providing the connecting device with nuts of a particular inner diameter, the connecting device can be used with threaded rods of the particular types having a diameter for cooperating with the specific types of nuts. Thus the design of the connecting device allows for adapting the connecting device to a particular use by only small adaptations of the design.

Also, since the set of nuts is positioned by a resilient body, the connecting device can be used to position the threaded end relative to the connecting means for connecting the connecting device to a construction element such as a second threaded rod or bracket or similar object.

For example, when the connecting device comprises a first and a second nut comprising respectively a larger and a smaller inner diameter, the first nut with the largest diameter is positioned closest to the insert opening. A threaded rod having a diameter for cooperating with the first nut is received by that nut when inserted in the insert opening. When the threaded rod is inserted over the entire depth of the first nut, it will abut the second nut with the smaller diameter since the inner diameter of the second nut is too small for receiving the threaded rod. However, because the second nut is resiliently supported by the resilient body, the threaded rod can be screwed further into the connecting device than the depth of the first nut. By rotating the threaded rod around its longitudinal axis, the end of the threaded rod will move the second nut in its axial direction into the receiving space, compressing the resilient body.

Thus, by adjusting the length over which the threaded rod is received in the connecting device, the connecting device can be used to position threaded rod relative to the construction element such as an end of a second threaded rod or a bracket or similar object connected to the connecting means of the connecting device.

In a preferred embodiment, the connecting means are positioned on an opposite side of the housing such that they connect the construction element such as a second threaded rod or a bracket or similar object in line with a longitudinal axis of a first threaded rod received in the connecting device. With such an embodiment, the connecting device can be used to adapt the distance between the end of the first threaded rod received in the device and the construction element such as a second threaded rod or a bracket or similar object connected to the device.

For example, the connecting device can be used for providing a height adjustable support for a bracket by connecting the bracket to the first end of a threaded rod which is mounted with its opposite end to a ceiling. The connecting device receives the first end of the threaded rod with the first set of nuts, and is connected with its connecting means to the bracket. Thus, the connecting device supports the bracket at a particular height. By adjusting the length over which the threaded rod is inserted into the connecting device, the height at which the bracket is supported can be adapted.

Preferred embodiments of the invention are defined by the dependent claims.

Further objects, embodiments and elaborations of the connecting device according to the invention will be apparent from the following description, in which the invention is further illustrated and elucidated on the basis of a number of exemplary embodiments, with reference to the drawings, in which:
Fig. 1 shows a schematic three dimensional view of a connecting device according to the invention;
Fig. 2 shows a schematic top view of a set of nuts for use with the connecting device of Fig. 1;
Fig. 3 shows a blank designed for folding a housing of the connecting device of Fig. 1;
Fig. 4 shows a schematic side view in section of an alternative connecting device according to the invention; and
Fig. 5 shows the connecting device of Fig. 4 while engaging a first rod and a second rod.

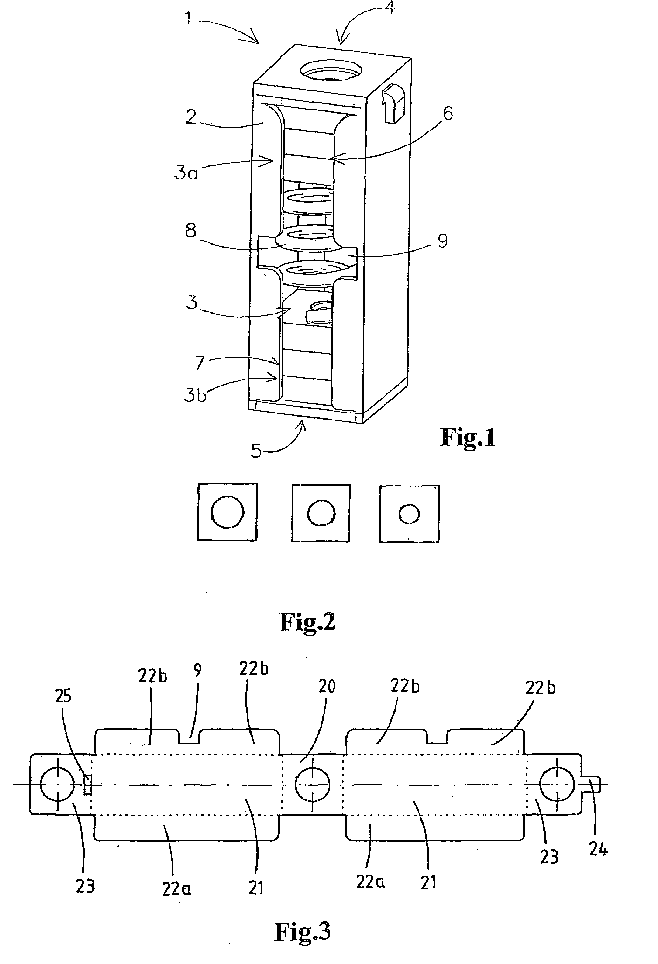

First, the invention will be further elucidated on the basis of the exemplary embodiment of a connecting device according to the invention as shown in Fig. 1. Thereafter, some particular alternative embodiments will be described.

Fig. 1 shows a connecting device 1 for connecting a first and a second threaded rod. The device comprises a housing 2 which defines a first receiving space 3a. The first receiving space comprises a first insert opening 4 for inserting the end of the first threaded rod. The housing 2 further defines a second receiving space 3b comprising a second insert opening 5 for inserting the end of the second threaded rod. In the embodiment shown, the first receiving space 3a and the second receiving space 3b are connected to each other. Thus they form an inner space 3.

The housing 2 further comprises a first set of nuts 6 and a second set of nuts 7, both positioned within the first receiving space 3a and the second receiving space 3b respectively. The sets of nuts are positioned in line with the corresponding insert openings for engaging the threaded rod end inserted through said opening. In the embodiment shown, the first set 6 is positioned adjacent the first insert opening 4 and the second set 7 is positioned adjacent the second insert opening 5. In an alternative embodiment, one or both sets may be positioned at some distance of the insert openings.

In the embodiment shown the first set of nuts 6 and second set of nuts 7 are concentrically positioned on opposite sides of the housing 2. Thus the first and second threaded rod are also coaxially positioned relative to each other when engaged by the respective first and second set of nuts. This configuration advantageous when both rods are loaded in axial direction, because in such a configuration the loads work lines of the loads coincide which prevents the loads from enacting a torque upon the connecting device.

In an alternative embodiment, the sets of nuts may be staggered relative to each other, such that when connected the first and second threaded rod are positioned parallel but not in line with each other. In such an embodiment the receiving spaces for receiving the ends of the threaded rods may be positioned next to each other for providing a compact housing.

A connecting device according to the invention comprises a resilient body for positioning at least one of the sets of nuts in an axial direction against the housing near the corresponding insert opening. In the embodiment shown, the first and second set of nuts are positioned at a mutual distance such that an interspace is created adjacent the first and second set of nuts. Furthermore, the first and second resilient body for in axial direction positioning of the first and second set of nuts respectively, are combined into one resilient body. The one resilient body is positioned in the interspace and engages both the first set of nuts 6 and the second set of nuts 7, for positioning the first and second set of nuts in their respective axial directions against the respective parts of the housing adjacent the first and second insert opening. Thus the first and second set of nuts can be positioned in an axial direction with one resilient body. In the embodiment shown, the resilient body is a helical spring 8.

In a preferred embodiment the set or sets of nuts positioned by the resilient body each comprise at least two nuts which have a different inner diameter, which nuts are positioned in an order of reducing inner diameter when seen from the respective insert opening. Fig. 2 shows a schematic top view of the set of nuts for use in the connecting device shown in Fig. 1. The nuts differ in inner diameter and therefore each engage a threaded rod of a specific diameter. The nut with the largest inner diameter is positioned closet to the insert opening while the nut with smallest diameter is positioned farthest away from the insert opening.

In the embodiment shown the sets of nuts comprise nuts with an inner diameter of respectively M6, M8 and M10. By positioning the nut with the largest inner diameter closest to the insert opening and the other nuts in order of reducing inner diameter, threaded rods with an outer diameter corresponding to M10 as well as for example a threaded rod with an outer diameter corresponding M6 can be inserted in the insert opening and engaged by the nuts M 10 and the M6.

In the preferred embodiment shown, the nuts differ in inner diameter but each have the same outer dimensions, as is shown in Fig. 2. Thus they can easily be positioned coaxially relative to each other by simply positioning the sides of the nuts along the same line, for example by placing the nuts with their sides between flat wall parts of the housing. Furthermore, the inside walls of the housing can support the nuts for movement in the axial direction. Thus, by exerting a force on a nut opposite to the force enacted by the resilient body on that nut, the nut can be moved in an axial direction from a position near the insert opening to a position further away from the insert opening. While the nut is moved between those positions, it is guided by the inside walls of the housing and resiliently supported by the resilient body.

The resilient body 8 in combination with the space 3 in which the resilient body is received determine the distance over which a threaded rod can be inserted into the connecting device 1. In the exemplary embodiment shown the distance between the first set of nuts and the second set of nuts is about 35 mm. However other dimensions of for example the housing and resilient body are also possible. Thus a connecting device may for example be capable of receiving two rods each over a distance of 10 mm, 30 mm, 50 mm or more.

In an alternative embodiment the nuts may differ in outer diameter. In such an embodiment the nuts may each be held in an adapter body for providing them with a similar outside diameter. Such a adaptor body enables coaxially positioning the nuts by using the inside wall surfaces, and is provided with an outside shape for cooperating with the housing, such that a nut held by the adapter can be guided for movement in a axial direction.

In the particular embodiment shown in Fig. 1 the housing 2 is designed for positioning the first set of nuts 6 and the second set of nuts 7 such that the nuts are fixed against rotation about their central axis, which axis coincides with the longitudinal axis of a threaded rod engaged by the nut. The nuts have a rectangular outer shape and the housing has a rectangular shaped inner space for engaging the nuts. Thus the outer shape of the nuts fits within the housing such that the nuts are positioned and fixed relative to the insert opening. In an alternative embodiment the nuts could for example have an octagon shape or a triangular shape in combination with a housing having an inner shape for receiving those nuts fixed against rotation about their axis.

For connecting a first and second rod with a connecting device according to the invention, a first rod is inserted into the housing via the first insert opening until the threaded end of the rod is engaged by a nut with an inner diameter corresponding to the outer diameter of the rod. By rotating the connecting device and the rod relative to each other the nut engages the threaded rod which is thus rotatably connected with the device.

The second rod is connected with the device by inserting it in the second insert opening until it is too engaged by a nut with an inner diameter corresponding to the outer diameter of the rod. By rotating the rod relative to the housing the second threaded rod is pivotably connected to the connecting device.

By rotating the rods relative to the housing, the distance between the ends of the rods can be adjusted. In the particular embodiment shown in Fig. 1, one may also rotate the housing relative to both the rods. For example, when the first rod is mounted to a ceiling and the second rod is supporting a pipe, by adjusting the distance between the threaded rod ends the height at which the hanging pipe is supported can be adjusted.

By positioning the nut with the largest inner diameter closest to the insert opening and the other nuts in order of reducing inner diameter, threaded rods with an outer diameter corresponding to M10 as well as for example a threaded rod with an outer diameter corresponding M6 can be inserted in the insert opening and engaged by the nuts M10 and the M6.

For example, in the embodiment shown the sets of nuts comprise nuts with an inner diameter of respectively M6, M8 and M10. When a threaded rod end with a diameter corresponding to the M8 is inserted in the insert opening and rotated, it is engaged by the corresponding nut. When the threaded end is inserted over the entire depth of the nut, it will abut the M6 nut which is forced against the M8 nut by the helical spring. By further engaging the threaded end, the threaded end will be further received in the inner space of the housing, the rod moving the M6 nut in an axial direction and thus compressing the helical spring. The M6 nut is supported by the inside walls of the housing which act as guides. By supporting the nuts in an axial direction with a resilient body, the threaded rod ends can be inserted into the inner space of the housing. Thus the threaded ends of a first and a second threaded rod can be positioned relative to each other over a significant range, allowing precise positioning.

A rod received by the nut with the smallest inner diameter may directly engage and compress the resilient body when its end is inserted into the receiving space beyond the specific nut. In an alternative embodiment, the resilient body may be provided with an inner space for receiving a threaded rod of a diameter for cooperating with the smallest inner diameter of the set of nuts. For example, in the embodiment shown the spiral spring may have an inner diameter wide enough for receiving an M6 rod.

In the preferred embodiment shown, the positioning means comprise a resilient body in the form of a helical spring 8. In an alternative embodiment, the resilient body may also be a leaf spring or other spring, or a body made of a resilient material such as rubber. Furthermore, when two sets of nuts are both provided with a resilient body each, these resilient bodies may differ in form, type or material they are made of. One set may for example be positioned by a helical spring while the other is positioned by a body made out of foam rubber.

The housing 2 of the embodiment shown in Fig. 1 has an elongated shape comprising a first and an opposite second end, whereby the first insert opening is positioned near the first end and the second insert opening is positioned near the second end. The insert openings are positioned such that the longitudinal axis of the housing coincides with the longitudinal axis of a first and second threaded rod when inserted into the housing and engaged respectively by the first and second set of nuts.

In a preferred embodiment at least a section of the housing is shaped for providing grip for rotating the housing about its longitudinal axis. Preferably the housing is shaped such that it has an angular sectional plane perpendicular to an insert direction of a threaded rod, which insert direction coincides with the axial direction of the set of nuts engaging the rod, and preferably coincides with the longitudinal axis of the housing. The embodiment shown in Fig. 1 is for example provided with a housing having a rectangular cross section. Such a shape provides grip for fingers or engagement tools such as pliers, thus facilitating rotating the house about its longitudinal axis for engaging the end of a threaded rod and/or for adjusting the distance between the ends of threaded rods engaged by the connecting device.

The housing 2 of the embodiment shown is furthermore provided with a slid shaped opening 9 for inserting the nuts into the inner space of the housing, or for removing the nuts from the inner space of the housing, for example for replacing a nut of which the internal screw thread has been damaged or for replacing the nuts with nuts of a different inner diameter. In an alternative embodiment, the first and second receiving space may for example each be provided with one or more of such an insert openings.

In an alternative embodiment the housing is designed such that it can be opened and closed and thus allows for inserting or retrieving nuts and/or a resilient body into or from the first and/or second receiving space. The housing may for example be provided with a lid or detachable sidewall, which can be removed to replace the nuts with nuts of a different diameter or to replace a helical spring by a resilient body made out of rubber.

Preferably, the housing of a connecting device according to the invention is made in one piece. The housing can for example be made by injection moulding or be folded out of a sheet of metal.

In a preferred embodiment the housing is folded out of a piece of sheet material, preferably metal. This allows for simple and economical production of the housing.

Fig. 3 shows a blank for folding a housing according to the invention. The blank comprises a central part 20 defining the second insert opening 5. The central part 20 is on opposite sides provided with strips 21 for, when the blank is in a folded position, forming the side walls of the housing 2 and defining the inner space 3. These side wall strips 21 are provided on their lateral sides with flaps 22a, 22b for positioning the helical spring 8 and the sets of nuts 6, 7 in the inner space 3.

The strips 21 for forming the side walls are each provided with strips 23 comprising a circular opening. When folded into position these strips 23 overlap each other and together define the firs insert opening 4 in line with the second insert opening 5. One of these strips 23 is provided with a slid 25 and the other is provided with a flap 24 for interacting together and fixing the strips 23 relative to each other when the blank is in the folded position, as shown in Fig. 1. It is noted that many blank layouts can be designed for obtaining for example a housing such as shown in Fig. 1. The design of such blanks is thought to lie within the scope of the skilled person known with the invention.

The nuts and the housing may be made out of similar or different materials such as plastics or metals. By combing the housing with mass produced nuts, a connecting device can be produced at relatively low costs. Furthermore, by using nuts which all have the same outside dimension, one housing can be used with different sets of nuts.

When nuts are used which differ in inner diameter but have a common outer shape, as shown inn Fig. 2, a housing with a simple rectangular shape, as shown in Fig. 1 is suitable for holding nuts of different inner diameter. The connecting device may also be provided with adapters enabling it to moveably support nuts which differ in outer diameter.

For example a housing can be provided with the two sets each comprising nuts of M10, M8 and M6, or with the first set comprising nuts of M10, M8 and M6 and the second set of M12, M10 and M8, etc. Therefore, with producing one type of housing, connecting devices for connecting a wider range of rods can be provided, which reduces overall production costs.

In an alternative embodiment the housing may for example be designed for holding one set of nuts of mutual different diameter adjacent the first opening and only one nut at the opposite second insert opening.

By using a housing in combination with nuts, the housing itself does not have to be provided with threaded parts. Thus the housing can be of a simple design and may for example be folded out of a sheet material, which allows for low production costs.

Furthermore, the housing can be used for providing connecting devices for connecting specific types of rods by simply combining the housing with nuts capable of engaging the specific types of rods.

Therefore, with producing one type of housing, connecting devices for connecting a wider range of rods can be provided, which reduces overall production costs.

An embodiment according to the invention shown in Fig. 1 comprises connecting means for connecting the device with a second threaded rod. The connecting means comprises a second receiving space defined by the housing, as well as a second insert opening defined by the housing for inserting an end of a second threaded rod in the second receiving space. The connecting means further comprise a second set of nuts comprising at least two nuts of a mutual different diameter, which second set is received in the second receiving space and is positioned in line with the second insert opening. Furthermore, the nuts are positioned in an order of reducing inner diameter when seen from the second insert opening, for engaging the second threaded rod end inserted through the second insert opening. The embodiment further comprises a resilient body for positioning the second set of nuts in an axial direction against the housing near the second insert opening.

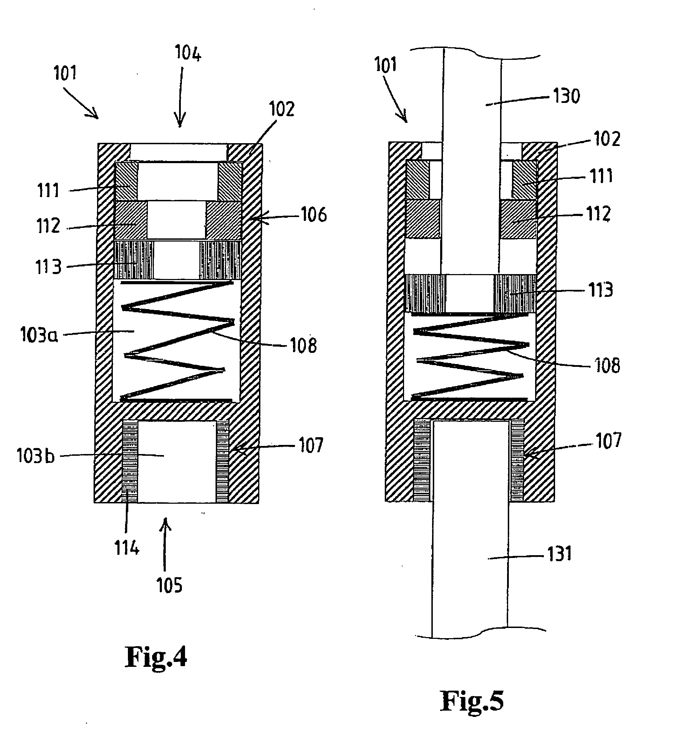

Fig. 4 shows a side view in section of an alternative connecting device according to the invention. The housing defines a first inner space 103a with a first insert opening 104 comprising a first set of nuts 106, and connecting means in the form of a second inner space 103b with a second insert opening 105 comprising a single nut 114.

The first set of nuts 106 comprises three nuts 111, 112 and 113 of different inner diameter and a common outer diameter. The nut 111 with the largest inner diameter is positioned near the insert opening and the nut with the smallest inner diameter is positioned farthest away from the insert opening.

The first set 106 is moveably supported by the housing 102 for movement in an axial direction. A resilient body in the form of a helical spring 108 is received in the first inner space 103a and engages the first set of three nuts. The helical spring is positioned with one end against the housing 102 and its opposite end against the third nut 113 of the first set of nuts 106. The helical spring 108 resilient supports the first set of nuts 106 in the axial direction. The resilient body is in a compressed state such that it forces the first set of nuts in position against the housing near the first insert opening 104.

The second nut 114 is positioned in the second inner space 103B, which is of such dimensions that it engages the nut 114 along its sides and thus fixedly positions the nut against rotation about its axis. The nut is furthermore fixedly received within the second inner space 103b against movement in the axial direction.

An adhesive may be provided inbetween the nut 114 and the housing 102 to fix the nut in the second inner space 103b. The nut may for example also be an insert combined with a plastic housing during an injection moulding production process.

Fig. 5 shows the connecting device 101 of fig. 4 with the first set of nuts 106 engaging the threaded end of a first rod 130. The rod 130 is engaged by the second nut 112 of the first set 106. The rod is engaged such that part of the threaded end extends into the inner space of the housing beyond the second nut 112. In this position the rod 130 pushes the third nut 113 into the inner space of the housing, compressing the resilient body 108.

To secure a rod 130 in a specific position, a nut may be provided with a tightening nut (not shown) which engages the rod on the part outside of the housing 102. When the threaded rod 130 is in the correct position the tightening nut may be screwed against the housing 102. Thus the rod 130 is positioned relative to the insert opening 104 by the tightening nut on one side of the opening 104 and the second nut 112 of the set of nuts 106 on the inside of the opening 104.

The resilient body 108 exerts a force on the third nut 113, and via the third nut 113 onto the rod 103 and the first nut 111 and second nut 112. Thus the resilient body 108 resilient supports the set 106 of nuts in the axial direction.

When the rod 130 is removed from the nut 112 and extracted form the insert opening, the resilient body 108 will push the nut 113 back into its position against the second nut 112, as shown in Fig. 4.

A second threaded rod 131 is engaged by the nut 114 in the second inner space 103b. The nut 107 is at least of a minimal length for engaging and supporting a rod 131. By providing a nut with extra length, the extra space within the nut may be used for positioning the threaded end of the rod relative to the housing and the threaded end of a threaded rod engaged by the first set of nuts.

In alternative embodiment, the housing may be provided with connecting means such as a clamp for connecting to connecting device to for example a bracket for supporting a pipe. Also, the housing may be provided with fastening means for receiving a hammer-head bolt or T-bolt, such that the head is held in the housing and the threaded end extends from the housing for engaging the bracket or other construction element to be connected to the connecting device. Preferably the head of the hammer-head bolt or T-bolt is held in the housing such that it is secured against rotation about the longitudinal axis of the bolt.

In an alternative embodiment, the housing may be provided with connecting means in the form of for example a receiving space provided with female screw thread along its inside walls for engaging a threaded rod, click fingers for cooperating with an receiving opening in for example a bracket, a clamp or an opening for receiving a hook or click fingers, etc.

Thus, a connecting device according to the invention may be used to connect a threaded rod to a construction element such as a bracket for supporting a pipe, or to a similar object. A construction element can on the other hand be connected via the connecting device, in particular the first set of nuts, to threaded rods of different diameter. Furthermore, the construction element, such as a bracket supporting a pipe or rail or similar object connected to it, may be positioned relative to the end of the rod connected to the device.

The invention is by no means limited to the exemplary embodiment described herein above, but comprises various modifications hereto, in so far as they fall within the scope of the following claims.

## Claims

1. Connecting device (1; 101) for connecting a first threaded rod (130) with a construction element such as a second threaded rod (131) or a bracket or similar object, the device (1; 101) comprising a housing (2; 102) which defines a first receiving space (3a; 103a) and a first insert opening (4; 104) for inserting an end of the first threaded rod in the first receiving space (3a; 103a), wherein the connecting device (1; 101) further comprises:
- a first set of nuts (6; 106) comprising at least two nuts of a mutual different diameter, which first set is received in the first receiving space (3a; 103a) and is positioned in line with the first insert opening (4; 104), wherein the nuts are positioned in an order of reducing inner diameter when seen from the respective insert opening (4; 104), for engaging the first threaded rod end inserted through the first insert opening (4; 104);
- connecting means (3b, 5; 103b, 105, 114) for connecting the connecting device with the construction element such as a second threaded rod (131) or a bracket or similar object, **characterized in that** the connecting device (1; 101) further comprises:
- a first resilient body (8; 108) for positioning the first set of nuts in an axial direction against the housing (2; 102) near the first insert opening (4; 104) and for resiliently supporting said nuts such that a nut can be moved in an axial direction between a position near the insert opening (4; 104) and a position further away from the insert opening (4; 104).

2. Connecting device (1) according to claim 1, wherein the connecting means (3b,5) for connecting the construction element comprise a second receiving space (3b) defined by the housing (2), as well as a second insert opening (5) defined by the housing (2) for inserting an end of a second threaded rod in the second receiving space (3b), and wherein the connecting means (3b,5) further comprise:
- a second set of nuts (7) comprising at least two nuts of a mutual different diameter, which second set is received in the second receiving space (3b) and is positioned in line with the second insert opening (5), wherein the nuts are positioned in an order of reducing inner diameter when seen from the second insert opening, for engaging the second threaded rod end inserted through the second insert opening (5); and
- a second resilient body (8) for positioning the second set of nuts in an axial direction against the housing near the second insert opening.

3. Connecting device (1) according to claim 2, wherein the first and the second set of nuts (6,7) are relative to each other coaxially received in the housing.

4. Connecting device (1) according to claim 2 or 3, wherein the first receiving space (3a) and the second receiving space (3b) are connected to each other.

5. Connecting device (1) according to claim 4, wherein the first and second set of nuts (6,7) are positioned at a mutual distance such that an interspace is present adjacent the first and second set of nuts, and wherein the first and second resilient body (8) are combined into one resilient body (8) which is positioned in the interspace such that the one resilient body (8) positions the first and second set of nuts (6,7) in their respective axial directions against the respective parts of the housing (2) adjacent the first and second insert opening (4,5).

6. Connecting device (1;101) according to one or more of the previous claims, wherein the housing (2;102) is designed for positioning the at least one set of nuts (6,7; 106) such that the nuts are fixed against rotation about their central axis.

7. Connecting device (1;101) according to one or more of the previous claims, wherein the at least one resilient body is a helical spring (8;108).

8. Connecting device (1; 101) according to one or more of the claims 2-7, wherein the housing (2;102) has an elongated shape comprising a first end and an opposite second end, and wherein the first insert opening (4;104) is positioned near the first end and the second insert opening (5;105) is positioned near the second end such that a threaded rod can be inserted into one of the insert openings such that its extends in a direction parallel to the longitudinal axis of the housing (2;102)

9. Connecting device (1;101) according to one or more of the previous claims, wherein a section of the housing in a cross section perpendicular to the insert direction of the threaded rod into at least one insert opening (4,5;104,105) is shaped for providing grip to tightening means for rotating the house relative to a threaded rod inserted in the insert opening.

10. Connecting device (1) according to one or more of the previous claims, wherein the housing (2) comprises at least an insert opening such as for example a slid (9) for inserting or removing of nuts and/or a resilient body (8) in the first and/or second receiving space, (3a,3b) and/or wherein the housing (2;102) is designed such that it can be opened and closed and for inserting or retrieving nuts and/or a resilient body into or from the first and/or second receiving space.

11. Connecting device (101) according to claim 1, wherein the connecting means for the construction element comprise a nut (114) stationary received in the housing (102) for engaging the second threaded rod end (131).

12. Connecting device according to claim 1, wherein the connecting means for the construction element comprise a bolt of which the head is at least partially received in the housing such that the shaft extends outside the housing for connecting the connecting device with a receiving opening of for example a bracket or similar object.

13. Connecting device (1;101) according to one or more of the previous claims, wherein the housing is formed out of a piece of sheet material.

## Patentansprüche

1. Verbindungsvorrichtung (1; 101) zum Verbinden eines ersten Gewindestabs (130) mit einem Bauelement wie etwa einem zweiten Gewindestab (131) oder einem Ausleger oder ähnlichen Gegenstand, wobei die Vorrichtung (1; 101) ein Gehäuse (2; 102) aufweist, das einen ersten Aufnahmeraum (3a; 103a) und eine erste Einsatzöffnung (4; 104) zum Einsetzen eines Endes des ersten Gewindestabs in den ersten Aufnahmeraum (3a; 103a) abgrenzt, wobei die Verbindungsvorrichtung (1; 101) darüber hinaus aufweist:
- eine erste Gruppe von Muttern (6; 106), die mindestens zwei Muttern mit einem zueinander unterschiedlichen Durchmesser aufweist, im ersten Aufnahmeraum (3a; 103a) aufgenommen und in einer Linie mit der ersten Einsatzöffnung (4; 104) angeordnet ist, wobei die Muttern, von der jeweiligen Einsatzöffnung (4; 104) her gesehen, in einer Reihenfolge abnehmenden Innendurchmessers angeordnet sind, um das Ende des durch die erste Einsatzöffnung (4; 104) eingesetzten ersten Gewindestabs in Eingriff zu nehmen,
- Verbindungsmittel (3b, 5; 103b, 105, 114) zum Verbinden der Verbindungsvorrichtung mit dem Bauelement wie etwa einem zweiten Gewindestab (131) oder einem Ausleger oder ähnlichen Gegenstand, **dadurch gekennzeichnet, dass** die Verbindungsvorrichtung (1; 101) darüber hinaus aufweist:
- einen ersten elastischen Körper (8; 108), um die erste Gruppe von Muttern in einer axialen Richtung nahe der ersten Einsatzöffnung (4; 104) am Gehäuse (2; 102) anliegend anzuordnen und die Muttern derart elastisch zu lagern, dass eine Mutter in einer axialen Richtung zwischen einer Stelle nahe der Einsatzöffnung (4; 104) und einer von der Einsatzöffnung (4; 104) weiter weg liegenden Stelle bewegt werden kann.

2. Verbindungsvorrichtung (1) nach Anspruch 1, wobei die Verbindungsmittel (3b, 5) zum Verbinden des Bauelements einen zweiten Aufnahmeraum (3b), der durch das Gehäuse (2) abgegrenzt ist, sowie eine zweite Einsatzöffnung (5) aufweisen, die durch das Gehäuse (2) abgegrenzt ist und zum Einsetzen eines Endes eines zweiten Gewindestabs in den zweiten Aufnahmeraum (3b) dient, und wobei die Verbindungsmittel (3b, 5) darüber hinaus aufweisen:
- eine zweite Gruppe von Muttern (7), die mindestens zwei Muttern mit einem zueinander unterschiedlichen Durchmesser aufweist, im zweiten Aufnahmeraum (3b) aufgenommen und in einer Linie mit der zweiten Einsatzöffnung (5) angeordnet ist, wobei die Muttern, von der zweiten Einsatzöffnung aus gesehen, in einer Reihenfolge abnehmenden Innendurchmessers angeordnet sind, um ein Ende des durch die zweite Einsatzöffnung (5) eingesetzten zweiten Gewindestabs in Eingriff zu nehmen; und
- einen zweiten elastischen Körper (8), um die zweite Gruppe von Muttern in einer axialen Richtung nahe der zweiten Einsatzöffnung am Gehäuse anliegend anzuordnen.

3. Verbindungsvorrichtung (1) nach Anspruch 2, wobei die erste und zweite Gruppe von Muttern (6, 7) in Bezug aufeinander koaxial im Gehäuse aufgenommen sind.

4. Verbindungsvorrichtung (1) nach Anspruch 2 oder 3, wobei der erste Aufnahmeraum (3a) und der zweite Aufnahmeraum (3b) miteinander verbunden sind.

5. Verbindungsvorrichtung (1) nach Anspruch 4, wobei die erste und zweite Gruppe von Muttern (6, 7) derart in einem gegenseitigen Abstand angeordnet sind, dass ein Zwischenraum angrenzend an die erste und zweite Gruppe von Muttern besteht, und wobei der erste und zweite elastische Körper (8) zu einem elastischen Körper (8) zusammengefasst sind, der derart in dem Zwischenraum angeordnet ist, dass der eine elastische Körper (8) die erste und zweite Gruppe von Muttern (6, 7) in ihren jeweiligen axialen Richtungen an den jeweiligen Teilen des Gehäuses (2) anliegend anordnet, die an die erste und zweite Einsatzöffnung (4, 5) angrenzen.

6. Verbindungsvorrichtung (1; 101) nach einem oder mehreren der vorhergehenden Ansprüche, wobei das Gehäuse (2; 102) dazu ausgelegt ist, die mindestens eine Gruppe von Muttern (6, 7; 106) derart anzuordnen, dass die Muttern um ihre Mittelachse drehfest sind.

7. Verbindungsvorrichtung (1; 101) nach einem oder mehreren der vorhergehenden Ansprüche, wobei es sich bei dem mindesten einen elastischen Körper um eine Schraubenfeder (8; 108) handelt.

8. Verbindungsvorrichtung (1; 101) nach einem oder mehreren der Ansprüche 2 bis 7, wobei das Gehäuse (2; 102) eine langgestreckte Form mit einem ersten Ende und einem entgegengesetzten zweiten Ende hat, und wobei die erste Einsatzöffnung (4; 104) nahe dem ersten Ende und die zweite Einsatzöffnung (5; 105) nahe dem zweiten Ende angeordnet ist, so dass ein Gewindestab derart in eine der Einsatzöffnungen eingesetzt werden kann, dass er sich in einer zur Längsachse des Gehäuses (2; 102) parallelen Richtung erstreckt.

9. Verbindungsvorrichtung (1; 101) nach einem oder mehreren der vorhergehenden Ansprüche, wobei ein Abschnitt des Gehäuses in einem Querschnitt senkrecht zur Einsatzrichtung des Gewindestabs in mindestens eine Einsatzöffnung (4, 5; 104, 105) so gestaltet ist, dass Festziehmitteln eine Angriffsmöglichkeit geboten wird, um das Gehäuse in Bezug auf einen in die Einsatzöffnung eingesetzten Gewindestab zu drehen.

10. Verbindungsvorrichtung (1) nach einem oder mehreren der vorhergehenden Ansprüche, wobei das Gehäuse (2) mindestens eine Einsatzöffnung wie etwa zum Beispiel einen Schlitz (9) aufweist, um Muttern und/oder einen elastischen Körper (8) in den/aus dem ersten und/oder zweiten Aufnahmeraum (3a, 3b) einzusetzen oder zu entnehmen, und/oder wobei das Gehäuse (2; 102) derart ausgelegt ist, dass es geöffnet und geschlossen werden kann, und um Muttern und/oder einen elastischen Körper in den/aus dem ersten und/oder zweiten Aufnahmeraum einzusetzen oder wieder herauszuholen.

11. Verbindungsvorrichtung (101) nach Anspruch 1, wobei die Verbindungsmittel für das Bauelement eine Mutter (114) aufweisen, die ortsfest im Gehäuse (102) aufgenommen ist, um das Ende des zweiten Gewindestabs (131) in Eingriff zu nehmen.

12. Verbindungsvorrichtung nach Anspruch 1, wobei die Verbindungsmittel für das Bauelement eine Schraube aufweisen, deren Kopf zumindest teilweise derart in dem Gehäuse aufgenommen ist, dass sich der Schaft außerhalb des Gehäuses erstreckt, um die Verbindungsvorrichtung mit einer Aufnahmeöffnung zum Beispiel eines Auslegers oder ähnlichen Gegenstands zu verbinden.

13. Verbindungsvorrichtung (1; 101) nach einem oder mehreren der vorhergehenden Ansprüche, wobei das Gehäuse aus einem Stück Blechmaterial hergestellt ist.

## Revendications

1. Dispositif de raccordement (1 ; 101) permettant de raccorder une première tige filetée (130) avec un élément de construction tel qu'une seconde tige filetée (131) ou une fixation ou un objet similaire, le dispositif (1 ; 101) comprenant un logement (2 ; 102) qui définit un premier espace de réception (3a ; 103a) et une première ouverture d'insertion (4 ; 104) permettant d'insérer une extrémité de la première tige filetée dans le premier espace de réception (3a ; 103a), où le dispositif de raccordement (1 ; 101) comprend en outre :
- un premier jeu d'écrous (6 ; 106) comprenant au moins deux écrous de diamètre mutuel différent, lequel premier jeu est reçu dans le premier espace de réception (3a ; 103a) et est positionné en alignement avec la première ouverture d'insertion (4 ; 104), où les écrous sont positionnés dans un ordre de diamètre interne décroissant vu depuis l'ouverture d'insertion (4 ; 104) respective, pour mettre en prise l'extrémité de la première tige filetée insérée dans la première ouverture d'insertion (4 ; 104) ;
- un moyen de raccordement (3b, 5 ; 103b, 105, 114) permettant de raccorder le dispositif de raccordement avec l'élément de construction tel qu'une seconde tige filetée (131) ou une console ou un objet similaire, **caractérisé en ce que** le dispositif de raccordement (1 ; 101) comprend en outre :
- un premier corps résilient (8 ; 108) permettant de positionner le premier jeu d'écrous dans une direction axiale contre le logement (2 ; 102) près de la première ouverture d'insertion (4 ; 104) et permettant de supporter de façon résiliente lesdits écrous de telle sorte qu'un écrou peut être déplacé dans une direction axiale entre une position proche de l'ouverture d'insertion (4 ; 104) et une position davantage éloignée de l'ouverture d'insertion (4 ; 104).

2. Dispositif de raccordement (1) selon la revendication 1, dans lequel le moyen de raccordement (3b, 5) permettant de raccorder l'élément de construction comprend un second espace de réception (3b) défini par le logement (2), ainsi qu'une seconde ouverture d'insertion (5) définie par le logement (2) permettant d'insérer une extrémité d'une seconde tige filetée dans le second espace de réception (3b), et dans lequel le moyen de raccordement (3b, 5) comprend en outre :
- un second jeu d'écrous (7) comprenant au moins deux écrous de diamètre mutuel différent, lequel second jeu est reçu dans le second espace de réception (3b) et est positionné en alignement avec la seconde ouverture d'insertion (5), où les écrous sont positionnés dans un ordre de diamètre interne décroissant vu depuis la seconde ouverture d'insertion, permettant de mettre en prise l'extrémité de la seconde tige filetée insérée dans la seconde ouverture d'insertion (5) ; et
- un second corps résilient (8) permettant de positionner le second jeu d'écrous dans une direction axiale contre le logement près de la seconde ouverture d'insertion.

3. Dispositif de raccordement (1) selon la revendication 2, dans lequel les premier et second jeux d'écrous (6, 7) sont reçus coaxialement relativement l'un par rapport à l'autre dans le logement.

4. Dispositif de raccordement (1) selon la revendication 2 ou 3, dans lequel premier espace de réception (3a) et le second espace de réception (3b) sont raccordés l'un à l'autre.

5. Dispositif de raccordement (1) selon la revendication 4, dans lequel les premier et second jeux d'écrous (6, 7) sont positionnés à une distance mutuelle de telle sorte qu'un interespace soit présent de façon adjacente aux premier et second jeux d'écrous, et dans lequel les premier et second corps résilients (8) sont combinés en un corps résilient (8) qui est positionné dans l'interespace de telle sorte que le premier corps résilient (8) positionne les premier et second jeux d'écrous (6, 7) dans leurs directions axiales respectives contre les parties respectives du logement (2) adjacent aux première et seconde ouvertures d'insertion (4, 5).

6. Dispositif de raccordement (1 ; 101) selon une ou plusieurs des revendications précédentes, dans lequel le logement (2 ; 102) est conçu pour positionner le au moins un jeu d'écrous (6, 7 ; 106) de telle sorte que les écrous soient fixes vis-à-vis d'une rotation autour de leur axe central.

7. Dispositif de raccordement (1 ; 101) selon une ou plusieurs des revendications précédentes, dans lequel le au moins un corps résilient est un ressort hélicoïdal (8 ; 108).

8. Dispositif de raccordement (1 ; 101) selon une ou plusieurs des revendications 2 à 7, dans lequel le logement (2 ; 102) a une forme allongée comprenant une première extrémité et une seconde extrémité opposée, et où la première ouverture d'insertion (4 ; 104) est positionnée près de la première extrémité et la seconde ouverture d'insertion (5 ; 105) est positionnée près de la seconde extrémité de telle sorte qu'une tige filetée peut être insérée dans l'une des ouvertures d'insertion de telle sorte qu'elle s'étend dans une direction parallèle à l'axe longitudinal du logement (2 ; 102).

9. Dispositif de raccordement (1 ; 101) selon une ou plusieurs des revendications précédentes, dans lequel une section du logement dans une coupe perpendiculaire à la direction d'insertion de la tige filetée dans au moins une ouverture d'insertion (4, 5 ; 104, 105) est façonnée pour apporter de la préhension à un moyen de serrage permettant de faire tourner le logement par rapport à la tige filetée insérée dans l'ouverture d'insertion.

10. Dispositif de raccordement (1) selon une ou plusieurs des revendications précédentes, dans lequel le logement (2) comprend au moins une ouverture d'insertion telle que par exemple une glissière (9) permettant d'insérer ou d'enlever des écrous et/ou un corps résilient (8) dans le premier et/ou le second espace de réception (3a, 3b) et/ou dans lequel le logement (2 ; 102) est conçu de telle sorte qu'il puisse être ouvert et fermé et pour insérer ou récupérer des écrous et/ou un corps résilient dans ou à partir du premier et/ou du second espace de réception.

11. Dispositif de raccordement (101) selon la revendication 1, dans lequel le moyen de raccordement pour l'élément de construction comprend un écrou (114) stationnaire reçu dans le logement (102) permettant de mettre en prise l'extrémité (131) de la seconde tige filetée.

12. Dispositif de raccordement selon la revendication 1, dans lequel le moyen de raccordement pour l'élément de construction comprend un boulon dont la tête est au moins partiellement reçue dans le logement de telle sorte que la tige s'étend à l'extérieur du logement pour raccorder le dispositif de raccordement avec l'ouverture de réception, par exemple, d'une console ou d'un objet similaire.

13. Dispositif de raccordement (1 ; 101) selon une ou plusieurs des revendications précédentes, dans lequel le logement est formé d'une pièce de matériau en feuille.
